# EUROPEAN PATENT APPLICATION

(11) **EP 1 447 421 A1**
(43) Date of publication of application: **18.08.2004**
(21) Application number: 04002325.1
(22) Date of filing: 03.02.2004
(51) Int. Cl.: C08G 59/62, C08L 63/00, C08L 79/08, C09J 179/08

(54) **Room temperature printable adhesive paste**

(30) Priority: 06.02.2003 US 361347
(71) Applicant: National Starch and Chemical Investment Holding Corporation, New Castle, Delaware 19720 (US)
(72) Inventor: He, Xiping, Cerritos, California 90703 (US); Shenfield, David, Fountain Valley, California 92708 (US)
(74) Representative: Held, Stephan, Dipl.-Chem. Dr.rer.nat.

(57) **Abstract**

An adhesive paste comprising liquid adhesive resin is partially curable to a tacky state at a temperature below the final cure temperature, and fully curable to a solid state at a temperature higher than used to reach the tacky state. In its tacky state, the adhesive paste will have sufficient strength to bond a silicon chip to a substrate with less than one kg force at room temperature. This ability is critical for thinner dies that may break with the use of greater force.

## Description

### FIELD OF THE INVENTION

This invention relates to printable adhesive pastes that can be used for adhering thin materials, and particularly for adhering thin silicon chips, to substrates.

### BACKGROUND OF THE INVENTION

In one design in the fabrication of a semiconductor package, a silicon chip is bonded to a substrate, such as a metal leadframe, with a conductive adhesive paste and then further connected by wire bonding to the bond pads on the leadframe to other circuitry. In most operations for this design, the adhesive is dispensed onto the substrate and the silicon chip contacted to the adhesive with sufficient pressure, and in some cases, heat, to cause the chip to adhere. For this design the adhesive must have the viscosity and rheology that allows it to be dispensed easily, and to remain in place after it is dispensed, even as the chip is pressed into the adhesive.

As the drive toward thinner and smaller electronic devices advances, the chips are designed to be thinner, the substrate and the chip are positioned closer together, and the edge of the chip and the bond pad are positioned closer together. Currently used adhesive pastes are inadequate for use with these thinner chips and smaller spaces because they are easily squeezed out of the smaller space between the substrate and thin chip by the pressure of the die being contacted to the adhesive. The adhesive can flow up the thinner die and onto its surface damaging the bond pad and circuitry. If the adhesive is conductive, any overflow will also contaminate the short distance between the edge of the chip and the bondpad, and any stray conductive particles could cause a short in the circuitry.

Another problem arises because semiconductor silicon chips are designed to be thinner. Thin dies have a greater tendency to warp on handling and current paste adhesives are not able to hold the thin die flat. Die warpage results in assembly problems, for example, breakage of wire bonds from the die to the leadframe. Moreover, thinner dies are more easily damaged or broken by the application of the pressure needed to adhere the singulated silicon chip to its substrate.

These newer package designs create a need for an adhesive that is not susceptible to flow upon the application of the pressure used to contact the semiconductor chip to the adhesive, and that is pressure sensitive and has an initial tackiness to stabilize thin silicon chips from warpage by holding the chip flat at room temperature.

### SUMMARY OF THE INVENTION

This invention is an adhesive paste that comprises at least one liquid adhesive resin that is partially curable to a tacky state at a temperature below the final cure temperature, and fully curable to a solid state at a temperature higher than used to reach the tacky state. In its tacky state, the adhesive paste will have sufficient strength to bond a silicon chip to a substrate with less than one kg force at room temperature. This ability is critical for thinner dies that may break with the use of greater force.

The application of heat at the stage in fabrication to form the tacky state is termed B-staging, and the adhesive, B-stageable. The viscosity of these adhesive pastes will be within the range of 10,000 cps to 800,000 cps.

### DETAILED DESCRIPTION OF THE INVENTION

Suitable liquid resins for making the inventive adhesive pastes are cycloaliphatic epoxy compounds, aliphatic epoxy compounds, aromatic epoxy compounds, monofunctional and multifunctional glycidyl ethers of bisphenol-A and bisphenol-F, provided they cure to a tacky pressure sensitive state at or less than room temperature and fully cure at a temperature higher than room temperature. Such epoxy resins are commercially available from CIBA, Sumitomo, Dainippon, or Resolution Technology, CVC Specialty Chemicals, Resolution Performance Products LLC, and National Starch and Chemical Company, for example.

Another suitable resin is epoxy novolac resin, which is prepared by the reaction of phenolic resin and epichlorohydrin. A preferred epoxy novolac resin is poly(phenyl glycidyl ether)-co-formaldehyde. Other suitable epoxy resins are biphenyl epoxy resin, commonly prepared by the reaction of biphenyl resin and epichlorohydrin; dicyclopentadiene-phenol epoxy resin; naphthalene resins; epoxy functional butadiene acrylonitrile copolymers; epoxy functional polydimethyl siloxane; and mixtures of the above.

Non-glycidyl ether epoxides may also be used. Suitable examples include 3,4-epoxycyclohexylmethyl-3,4-epoxycyclohexane carboxylate, which contains two epoxide groups that are part of the ring structures and an ester linkage; vinylcyclohexene dioxide, which contains two epoxide groups and one of which is part of the ring structure; 3,4-epoxy-6-methyl cyclohexyl methyl-3,4-epoxycyclohexane carboxylate; and dicyclopentadiene dioxide.

Further examples of suitable epoxies include: 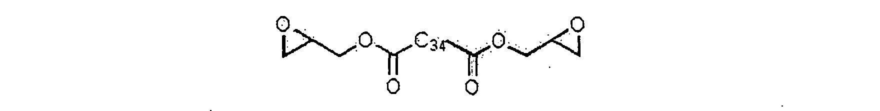 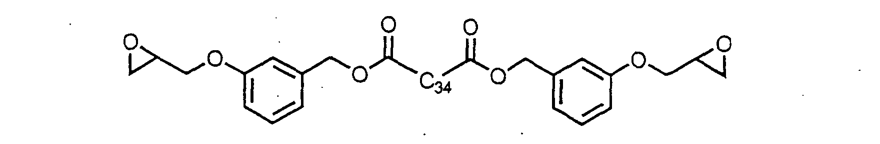 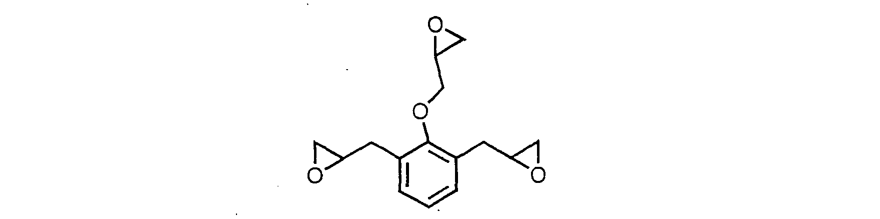 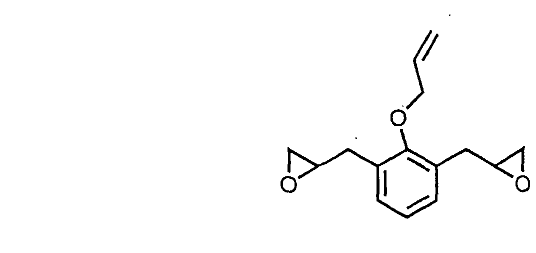 and

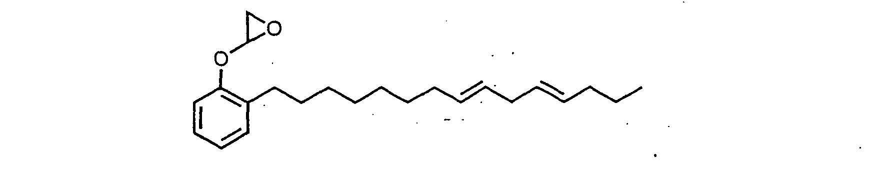

Suitable catalysts or curing agents for epoxies include imidazoles or imidazole-anhydride adducts. Preferred imidazoles for use alone or for forming the adduct include non-N-substituted imidazoles, such as, 2-phenyl-4-methyl imidazole, 2-phenyl imidazole, and imidazole. Other useful imidazoles are alkylsubstituted imidazoles, N-substituted imidazoles, and mixtures of those.

Preferred anhydrides for forming the adduct are cycloaliphatic anhydrides, such as, pyromellitic dianhydride, commercially available as PMDA from Aldrich. Other suitable anhydrides include methylhexa-hydro phthalic anhydride (commercially available as MHHPA from Lonza Inc. Intermediates and Actives) methyltetra-hydrophthalic anhydride, nadic methyl anhydride, hexahydro phthalic anhydride, tetra-hydro phthalic anhydride, phthalic anhydride, dodecyl succinic anhydride, bisphenyl dianhydride, benzophenone tetracarboxylic dianhydride, and mixtures of those.

Two preferred adducts are a complex of 1 part 1,2,4,5-benzenetetracarboxylic anhydride and 4 parts 2-phenyl-4-methylimidazole, and a complex of 1 part 1,2,4,5-benzenetetracarboxylic dianhydride and 2 parts 2-phenyl-4-methylimidazole. The adducts are prepared by dissolving the components in a suitable solvent, such as acetone, under heat. Upon cooling the adduct precipitates out. Such adducts are used in any effective amount, but preferably are present in an amount of 1% to 20% by weight of the organic material in the composition.

The temperature for curing the resins to the tacky state will be typically in the range of 50° to 200°C. Alternatively, UV radiation can also be used, typcially in the wavelength range of 400 to 500 nm. The temperature for full curing will be above the cure temperature to reach the tacky state, and typically will be in the range up to 200°C.

It will be possible for some formulations to utilize a proportion of solid resin. In that case, the proportion is preferably 50% or less by weight of the liquid resin. It is also preferable that the solid resin be soluble in the liquid resin or in a solvent that is able to dissolve the solid resin and that will evaporate at the temperature used for the B-stage heating.

Examples of suitable solvents for dissolving a solid resin include 1-methoxy-2-propanol, propylene glycol methyl ether acetate, glycol ether, glycol acetate or alcohol. Such solvents may also be used for the purpose of modifying the viscosity of the composition.

In addition to the epoxy resins described above, other suitable resins include cycloaliphatic epoxy compounds, such as CIBA GY179; aromatic epoxy compounds, such as bis-phenol A diepoxide, with phenolic hardeners and phosphine-based curing agents; acrylic compounds, such as those available from Sartomer, with photoinitiators; epoxy compounds, such as those available from National Starch, CIBA, Sumitomo or Dainippon, with latent amine or imidazole curing agents; bismaleimide compounds (electron acceptors), such as those available from Ciba Specialty Chemicals or National Starch and Chemical Company, with (electron donors) vinyl ethers, vinyl silanes, styrenic compounds, cinnamyl compounds.

Examples of suitable electron donor resins include those having the structures: 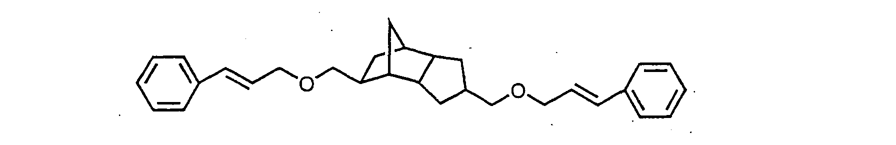 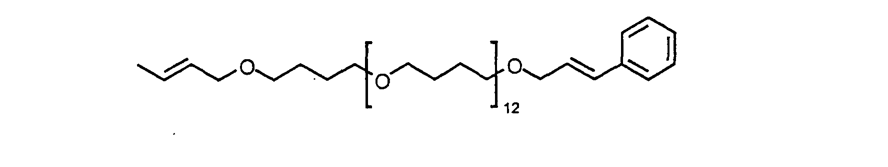 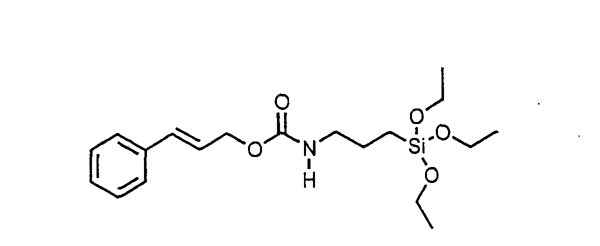 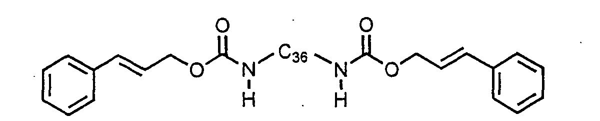 in which C₃₆ represents a linear or branched alkyl of 36 carbons derived from linoleic and oleic acids; 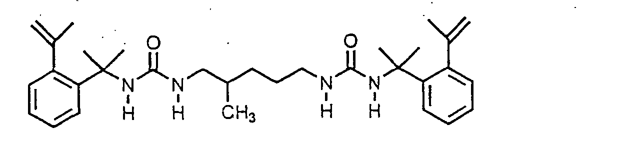 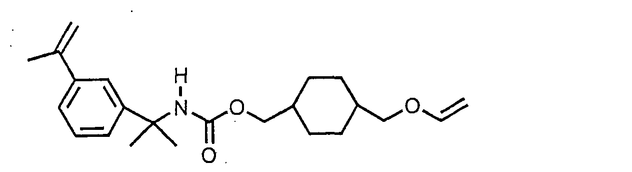 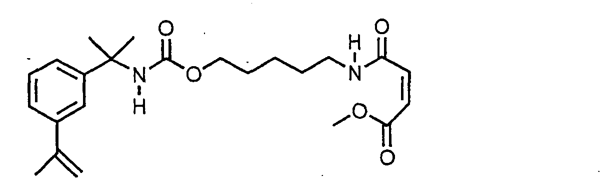 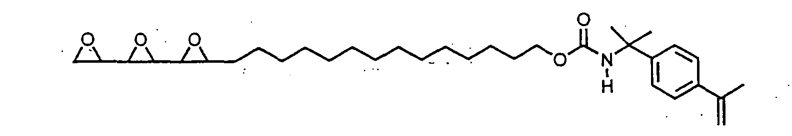 and 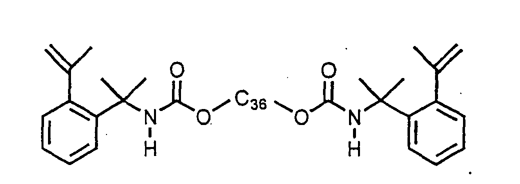 in which C₃₆ represents a linear or branched alkyl of 36 carbons derived from linoleic and oleic acids.

Curing agents such as free radical initiators, thermal initiators and photoinitiators will be present in an effective amount to cure the composition. In general, those amounts will range from 0.1% to 30%, preferably 1% to 20%, by weight of the total organic material (that is, excluding any inorganic fillers) in the composition. The actual cure profile will vary with the components and can be determined without undue experimentation by the practitioner.

The curable compositions may comprise nonconductive or thermally or electrically conductive fillers. Suitable nonconductive fillers are particles of vermiculite, mica, wollastonite, calcium carbonate, titania, sand, glass, fused silica, fumed silica, barium sulfate, and halogenated ethylene polymers, such as tetrafluoroethylene, trifluoro-ethylene, vinylidene fluoride, vinyl fluoride, vinylidene chloride, and vinyl chloride. Suitable conductive fillers are carbon black, graphite, gold, silver, copper, platinum, palladium, nickel, aluminum, silicon carbide, diamond, and alumina. If used, fillers generally will be present in amounts up to 98% by weight of the formulation.

The adhesive pastes may be screen or stencil printed onto the chosen substrate for the semiconductor. Such substrates include, for example, FR4BT board, flexible polyimide films, ceramic. Techniques for screen and stencil printing on substrates for use in semiconductor packaging operations are well known in the art. Alternatively, the adhesive pastes may be screen or stencil printed onto the passive face of a semiconductor wafer before it is singulated into chips. In this case, a release liner or overleaf may be placed on the surface of the tacky B-staged adhesive for protection during any transport or storage. Another protective cover that could be used is a dicing tape, which would remain on the surface of the adhesive as the wafer is diced into the individual chips. These operations are also known in the art.

In a further embodiment, this invention is an assembly comprising a substrate for a semiconductor chip or die and a B-stageable adhesive as described above deposited on the substrate, partially cured to a tacky state. When the compositions are cured to a tacky state, less force is needed to adhere a semiconductor die. This is especially critical for those dies that are thin, for example, 3 mil or thinner.

EXAMPLE: Adhesive formulations were prepared with the components and in the weight percentages shown in the following table. These adhesives were then deposited on an 80X80 ceramic die and cured (B-staged) to a tacky state. The conditions for the B-staging are given in the table. Each die was then attached to a ceramic substrate with the force and at a temperature recited in the Table as the attach temperature. Observation of the dies disclosed no flow of the adhesive upon the application of pressure and no die warpage. After the die was contacted to the substrate, the adhesive was cured by heating for 30 minutes while ramping the temperature to 175°C, and then by holding at 175°C for one hour. Die shear strength was measured on a Daye 4000 instrument at room temperature and at 245°C; those results are reported in the table. Thixotropic index for all formulations were within the range of 1.0 to 1.3, which range is acceptable for commercial application. The data show that the adhesive of Formulae D, E, and F, which are prepared from liquid resins, can be applied at room temperature, be cured to a tacky state, and then be used to attach a semiconductor die at room temperature with the application of less than one Kg force pressure. These adhesives were finally cured to provide commercially acceptable die shear strength and did not flow upon the application of pressure.

| Formulation Wt percent | | B-Stage Conditions | Attach Conditions | Die Shear Strength Rm Temp (MPa) | Die Shear Strength 245°C (MPa) |
|---|---|---|---|---|---|
| Formulation A | | 100°C | 100°C | 66.27 | 7.86 |
| solid siloxane epoxy | 48.24 | 30 min | 1 Kg | | |
| solid phenolic resin | 12.72 | | | | |
| solvent* | 30.19 | | | | |
| surfactant | 00.34 | | | | |
| epoxy catalyst | 00.43 | | | | |
| adh promoter | 00.32 | | | | |
| filler | 07.76 | | | | |
| Formulation B | | 110°C | 115°C | 59.98 | 8.56 |
| Solid siloxane epoxy | 45.03 | 30 min | 1 Kg | | |
| Solid phenolic resin | 11.87 | | | | |
| Solvent | 30.87 | | | | |
| Surfactant | 00.36 | | | | |
| Epoxy catalyst | 00.14 | | | | |
| adh promoter | 00.30 | | | | |
| filler | 11.43 | | | | |
| Formulation C | | 110°C | 1115°C | 47.86 | 3.53 |
| Solid siloxane epoxy | 47.18 | 30 min | 1 Kg | | |
| Solid phenolic resin | 12.43 | | | | |
| solvent | 34.27 | | | | |
| surfactant | 00.38 | | | | |
| epoxy catalyst | 00.14 | | | | |
| adh promoter | 00.32 | | | | |
| filler | 05.28 | | | | |
| Formulation D | | 110°C | Rm Temp | 31.75 | 9.01 |
| Liquid bismalaimide | 30.43 | 10 min | 700 g | | |
| liquid epoxy | 07.61 | | | | |
| liquid acrylic | 08.10 | | | | |
| liquid rubber epoxy | 06.09 | | | | |
| Surfactant | 00.53 | | | | |
| imidazole | 00.17 | | | | |
| radical initiator | 00.60 | | | | |
| adh promoter | 00.63 | | | | |
| filler | 45.84 | | | | |
| Formulation E | | 130°C | Rm Temp | 28.45 | 7.74 |
| Liquid bismalaimide | 33.95 | 30 min | 700 g | | |
| liquid epoxy | 08.49 | | | | |
| liquid acrylic | 09.03 | | | | |
| liquid rubber epoxy | 06.79 | | | | |
| Surfactant | 00.60 | | | | |
| imidazole | 00.18 | | | | |
| radical initiator | 00.68 | | | | |
| adh promoter | 00.70 | | | | |
| filler | 39.58 | | | | |
| Formulation F | | 130°C | Rm Temp | 22.87 | 7.70 |
| Liquid bismalaimide | 32.65 | 20 min | 700 g | | |
| liquid epoxy | 08.16 | | | | |
| liquid acrylic | 08.69 | | | | |
| liquid rubber epoxy | 06.53 | | | | |
| Surfactant | 00.58 | | | | |
| imidazole | 00.18 | | | | |
| radical initiator | 00.66 | | | | |
| adh promoter | 00.57 | | | | |
| filler | 41.88 | | | | |

| | | | | | |
|---|---|---|---|---|---|
| * Solvent is dipropylene glycol methyl ether or propylene glycol methyl ether acetate or a mixture of them. | | | | | |

## Claims

1. An adhesive paste comprising a liquid resin selected from the group consisting of epoxy resin, bismaleimide resin, acrylic resin, and a combination of those, in which the liquid resin can be cured to a tacky state at one temperature and to a solid state at a higher temperature, and a curing agent for the resin.

2. The adhesive paste according to claim 1 further comprising a filler.

3. The adhesive paste according to claim 1 applied to a substrate and cured to a tacky state.
